# EUROPEAN PATENT APPLICATION

(11) **EP 4 481 093 A1**
(43) Date of publication of application: **25.12.2024**
(21) Application number: 22926598.8
(22) Date of filing: 08.04.2022
(51) Int. Cl.: D01F 9/22, D01F 9/24, D01F 9/145, D01F 9/17, D01F 1/09, D01F 1/10, C01B 32/184

(54) **PREPARATION METHOD FOR LARGE CRYSTAL REGION HIGH CRYSTALLINITY CARBONACEOUS FIBER**

(30) Priority: 16.02.2022 CN 202210140739
(71) Applicant: Zhejiang University, Hangzhou, Zhejiang 310058 (CN)
(72) Inventor: GAO, Chao, Hangzhou, Zhejiang 310058 (CN); MING, Xin, Hangzhou, Zhejiang 310058 (CN); XU, Zhen, Hangzhou, Zhejiang 310058 (CN); LIU, Yingjun, Hangzhou, Zhejiang 310058 (CN)
(74) Representative: Zaboliene, Reda
(86) International application number: PCT/CN2022/085936
(87) International publication number: WO 2023/155282

(57) **Abstract**

The present invention discloses a preparation method for a large crystal region high crystallinity carbonaceous fiber,, where a wet spinning method is mainly used to assemble graphene oxide and other polymer materials in liquid phase, a two-dimensional graphene oxide sheet performs a "template orienting effect" on polymer molecules, causing the polymer molecules to be directed and crystallized on the two-dimensional graphene oxide sheet" thereby preparing a composite raw fiber with high orientation and crystallinity. High temperature treatment, two-dimensional topological graphene sheet catalyzes pyrolyzed molecules through a "graphitization inducing effect" to directionally generate a graphene-like carbon layer using a single-layer graphene sheet as a template, thereby promoting a stacking behavior of a graphene sheet, to obtain a composite carbonaceous fiber with an optimal graphite crystal structure. The graphene fiber material prepared by the present method has characteristics of low cost, high crystallinity and high performance, and can be applied to a field of lightweight high strength structural materials. The present invention is a high crystallinity graphene fiber material with two-dimensional induction effect and a preparation method for the same.

## Description

### TECHNICAL FIELD

The present invention relates to a field of nanomaterials, and in particular to a preparation method for large crystal region high crystallinity carbonaceous fiber.

### BACKGROUND

One-dimensional linear polymers are cheap and easy to obtain in the industrial production of carbon fibers, and are mainly obtained by high-temperature carbonization and crystallization of one-dimensional linear polymer precursors. Commercial polyacrylonitrile-based carbon fibers exhibit high mechanical strength after 1300 °C carbonization treatment. However, their internal graphite crystal regions are small and disorderly arranged, resulting in poor electrical and thermal conductivity, with thermal conductivity lower than 60 W/mK. Even undergoing high temperature graphitization at 2800 °C, the size of graphite crystal region improves slightly, but a large-size graphite crystal region is still unable to be generated, with the highest thermal conductivity reaching only 300 W/mK. A fundamental reason is the topological geometric dimension mismatch between one-dimensional polymer chains and two-dimensional graphene sheets, one-dimensional polymer molecular chains spontaneously carbonize and crystallize, and crystallization in the graphite crystal region is disordered, leading to the formation of a three-dimensional carbonaceous crystal region that is small in size and poorly oriented, thereby resulting in more electron/phonon scattering centers within the fibers. Therefore, forming carbonaceous fibers with high strength, high electrical conductivity and high thermal conductivity is currently unattainable.

Since 2004, the research group of Professor A.K. Geim from the University of Manchester in the UK discovered graphene, proving that perfect two-dimensional crystal structures can also exist stably at non-absolute zero temperature, and thus winning the Nobel Prize in Physics. Specifically, graphene is a two-dimensional honeycomb lattice of single-layer carbon atoms connected by sp² covalent bonds. Its mechanical strength can reach 120 GPa, Young's modulus can reach 1.0 TPa, carrier mobility can reach 15000 cm²/(V ·s), and thermal conductivity can reach 5300 W/mK. Therefore, incorporating the two-dimensional graphene sheets as constituent elements of macroscopic materials has become a new way to develop new carbonaceous macroscopic materials. The excellent physical and chemical properties of the graphene can be inherited into its macroscopic assembly by means of controllable preparation, and all aspects of performance of carbonaceous macroscopic materials can be improved.

The graphene, as a basic constituent element of the graphite crystal region, can provide the best constituent element for macroscopic carbon materials with high strength, high electrical conductivity and high thermal conductivity. However, in a process of assembling nanomaterials into a macroscopic material, numerous defects and voids are inevitably introduced, eventually leading to a gap between properties of the macroscopic material and properties of a monolithic counterparts. How to prepare low-cost and high thermal conductivity carbonaceous fibers by combining with existing commercial polymers while ensuring the preparation of high-performance carbonaceous fibers has always been a difficult problem. Existing graphene/polymer composites mainly have the following problems: first, a sheet diameter of the graphene is small, since raw materials for preparing small sheet diameter graphene or graphene oxide are easy to obtain, the sheet diameter of the graphene in most graphene/polymer composites is less than 10 micrometers, and advantages of the graphene as a two-dimensional topological geometric plane structure cannot be fully utilized. Second, the graphene is disorderly arranged in the polymer and difficult to orient, due to the sheet diameter of the graphene used is small, it is difficult for the graphene to form a liquid crystal phase in both dispersion and polymer solution. In order to form the liquid crystal phase, a content of the graphene in the polymer needs to be greatly increased, however, increasing a proportion of the graphene in the polymer reduces chain entanglement density of the polymer in a composite system due to a two-dimensional shielding effect of the graphene. Therefore, a fluidity of the composite solution is greatly weakened, which is not conducive to a subsequent molding process. Combining the first and the second points, the graphene cannot form a continuous network in a polymer system, which is an island phase composite structure, and an interlayer confinement effect of the graphene is limited. Therefore, a molecular arrangement of a polymer body is highly disordered, and the crystallinity of a crystalline region is low, the polymer molecular chain needs to be improved by subsequent multiple stretching and other processes, thereby resulting in complex processes and increased costs. In addition, third, the graphene has low oxidation degree and low structural defects, since most of the existing graphene is added to the polymer system as a physical filler, chemical catalytic effects of oxygen-containing functional groups and structural defects of the graphene as chemical groups are neglected. Therefore, the intrinsic chemical properties of the graphene itself are not fully utilized.

Therefore, the present invention forms a liquid crystal composite solution by liquid phase compounding of a large-size and high-oxidized monolayer graphene oxide sheet with a polymer precursor, and processing a carbonization post-treatment, with a help of an unique two-dimensional topological geometry of the graphene, a problem of mismatch in topological geometric dimension between the one-dimensional linear polymer and the two-dimensional graphite sheet and a three-dimensional graphite crystal region is solved by a "two-dimensional structure template effect" of the large graphene sheet and an "graphitization-inducing effect" of the oxygen-containing functional groups, and low-cost graphene carbonaceous fibers with high crystallinity are successfully prepared.

### SUMMARY

A purpose of the present invention is to improve conventional industrial preparation processes of carbon fibers, and to provide a preparation method for obtaining a large crystal region high crystallinity carbonaceous fiber by using cheap and readily available one-dimensional linear polymers, which has high thermal conductivity.

Specifically, the present invention is to add a two-dimensional flake crystal seed (graphene oxide) into a one-dimensional linear polymer, and a composite raw fiber obtained after wet spinning is then subjected to high temperature treatment at over 2000 °C for 0.5 hours to 3 hours. On the one hand, one-dimensional molecular chain of a carbonizable polymer is aligned and oriented by a large sheet of graphene oxide through a strong interlayer confinement effect, that is, directional orientation crystallization is performed by a "structural template effect" of the graphene oxide, to prepare the composite raw fiber with high crystallinity. On the other hand, edge defects and surface oxygen-containing functional groups of the graphene oxide are used as catalytic sites, to achieve a graphitization-inducting effect, thereby efficiently converting a one-dimensional carbonizable polymer into a two-dimensional graphene-like carbon layer.

In order to achieve the structural template effect and the graphitization-inducting effect, need to met:
(1) A size of a graphene oxide sheet is greater than 30 micrometers, and a carbon oxygen ratio is greater than 0.5;
(2) One-dimensional linear polymer molecules are carbonizable polymers, a residual carbon rate is greater than 20%, and an aromaticity index is greater than 0.8;
(3) A ratio of a carbon content of the two-dimensional flake crystal seed to a carbon content of the polymer is greater than 1:8.3;
(4) A solid content of a mixed solution is 3 mg/g to 30 mg/g.

The above four conditions complement each other and are indispensable. If the size of the graphene oxide sheet is less than 30 micrometers and an addition amount is low (less than 30%), a continuous two-dimensional network sheet structure is difficult to form in a polymer matrix, and a crystal template effect and the interlayer confinement effect cannot be effectively realized; if the size is greater than 100 micrometers, since oversized two-dimensional graphene oxide sheet is easy to form a folded conformation, hindering a formation of a continuous seed plane, and affecting a display of the subsequent graphitization-inducting effect to a certain extent. The residual carbon rate of the one-dimensional linear polymer molecules is greater than 20% and the aromaticity index is greater than 0.8; if the residual carbon rate is too low, the one-dimensional linear polymer molecules cannot form an effective intermediate phase for a topological structure transformation, thereby decomposing to produce a large number of gas products, making the graphitization-inducting effect impossible to achieve, and easily leading to the formation of porous structure within the fiber. The higher the ratio of the carbon content of the two-dimensional flake crystal seed to the carbon content of the polymer matrix, the higher the graphitization-inducting effect and a carbon yield of final heat-treated fibers, and the easier the graphitization-inducting effect occurs. A concentration of the mixed solution needs to be controlled in a range of from 3 mg/g to 30 mg/g, the concentration range is conducive to an actual spinning operation, too low and too high are both greatly increase difficulty of spinning. Obtained fiber materials have high crystallinity, which can not only improve its mechanical strength, but also reduce internal defects and disorder of materials, promoting an internal transmission of phonons and electrons, thereby improving the electrical and thermal conductivity. A high crystallinity graphene fiber is composed of a plurality of graphene sheets and graphene-like carbon layers, a graphitization degree is greater than 80%, a density is greater than or equal to 1.8g/cm³, and a carbon content is up to 80wt%. Electron and phonon paths are formed by a plurality of graphite crystals in the fiber, an orientation degree of the graphite crystals is greater than 80 %, and a lateral size of the graphite crystals is greater than 100 nm. The larger the size of the graphite crystals, the longer free paths of the electrons and phonons, and the higher electrical and thermal conductivity of the fiber materials; at the same time, an internal graphite crystal stacking mode of the high crystallinity graphene fiber is mainly AB ordered stacking, and a proportion of the AB ordered stacking is not less than 50% of the overall graphite crystal region inside the fiber. The internal structure of the material is more uniform, with fewer stress concentration points, and the material can achieve higher mechanical strength.

Specifically, the method includes the following steps:
(1) Mixing a graphene oxide solution and a polymer molecule solution evenly; a mass ratio of the graphene oxide to the polymer is from 0.1:100 to 50:100, a solid content of a mixed solution is 3 mg/g to 30 mg/g. The mass ratio of the graphene oxide to the polymer is controlled, to ensure that the mixed solution has typical liquid crystal properties, and the mixed solution has spinnability. If the mass ratio of the graphene oxide to the polymer is too low, the final crystallinity of the fiber is not high and the graphite crystal region is small; if the mass ratio is too high, the final density of the fiber is low and the cost is increased.
(2) Spinning a liquid crystal composite spinning solution by a liquid crystal wet spinning process, maintaining a proper drafting force during the spinning process, a force range of the drafting force is 0 MPa to 100 MPa, and ensure that the fiber does not break. Under a shearing action of an extrusion flow field, the one-dimensional linear polymer molecules use two-dimensional graphene oxide molecules as structural templates for directional orientation crystallization, thereby realizing the "structural template effect" of the graphene oxide, and preparing the composite raw fiber with high polymer crystallinity. Compared with polymer fibers without two-dimensional graphene oxide template, the polymer inside the fiber has low crystallinity, no directional arrangement, and low orientation. The crystallinity of the polymer in the raw fiber is 40% to 100%.
(3) High temperature heat treating the high crystallinity composite raw fiber after drying. Specifically, in a tube furnace, the temperature is heated to greater than 2000 °C, and maintained for 0.5 hours to 3 hours. A graphene assembly material is crystallized, to obtain the structure-function integrated graphene material described above. During a heat treatment process, small molecular carbon sources are produced by the polymer molecules during a process of thermal cracking, the two-dimensional graphene oxide can be transformed into the two-dimensional graphene sheets by removing surface functional groups and repairing defects. The two-dimensional graphene sheets induce and catalyze a directional assembly of polymer cleavage molecules through edges of the sheets and surfaces of the sheets, thereby forming highly oriented graphene-like layers, showing the "graphitization-inducing effect", to achieve the graphite crystal region with high quality, large size and high crystallinity. Compared with pure polymer fibers without the graphene oxide sheets, the crystallinity and size of the graphite crystal region generated inside the highly oriented graphene-like layers are low (smaller than 8 nm).

During the high temperature treatment process, an additional drafting force can be applied, a force value of the drafting force ranges from 0MPa to 100 MPa, and ensures that the fiber does not break.

In the present invention, the polymers are carbonizable polymers, the carbonizable polymers can be one or more of different molecular weight of polyacrylonitrile (PAN), polyimide (PI), polyacrylamide, Lignin, asphalt, phenolic resin and the like, mixed in any proportion.

The present invention further provides an application of a high crystallinity graphene fiber material with two-dimensional induction effect above in the graphene materials with high strength, high modulus, high electrical conductivity and high thermal conductivity. For example, thermal conductive fillers are used as high thermal conductivity composite materials or as high electrical conductive composite materials, and the high strength is used as composite structural components.

Beneficial effects of the present invention are: the present invention utilizes the "structural template effect" and the "graphitization-inducing effect" of the large-size graphene oxide, to improve the residual carbon rate, the graphitization degree and the crystallinity of the polymer are. By solving the mismatch between the one-dimensional linear polymer and the two-dimensional graphite sheet in the topological geometric dimension, the geometric structure of the two-dimensional graphene oxide sheet is used to induce the one-dimensional polymer to generate a two-dimensional graphene-like sheet. A high crystallinity graphene fiber material can be obtained by adding a small amount of the large-size two-dimensional graphene oxide (with a higher polymer ratio), which is very rare in reducing the production cost of the graphene fibers and improving performance. At the same time, the AB stacking mode of graphite crystals inside the fiber can be regulated by the graphene-like layers induced by graphene catalysis in polymers, thereby increasing the density of the graphene fiber, promoting the orderly arrangement of the graphite crystal regions, and reducing the internal defects of the fiber, therefore, the high crystallinity graphene fiber material with high strength, high modulus, high electrical conductivity and high thermal conductivity is obtained.

### BRIEF DESCRIPTION OF DRAWINGS

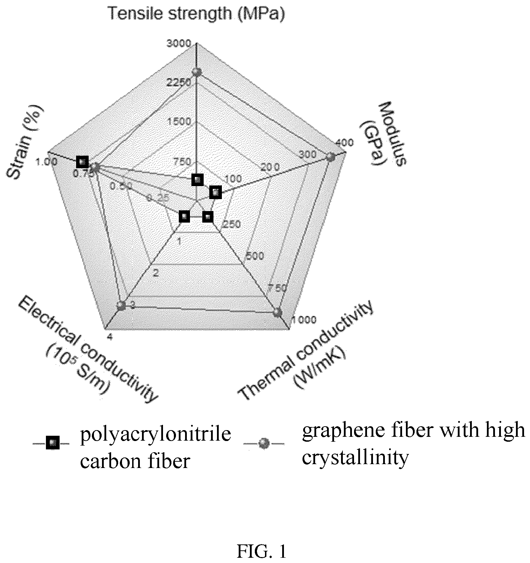

FIG. 1 is data of fiber strength, modulus, electrical conductivity and thermal conductivity obtained from Example 1 and Example 2, wherein blue balls refer to pure polymer fibers (polyacrylonitrile), and red balls refer to highly crystalline graphene fibers.

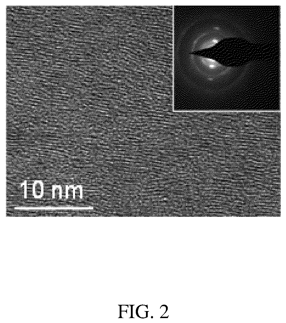

FIG.2 is an internal graphite crystal structure and a selected area electron diffraction pattern of the highly crystalline graphene fiber obtained from Example 2.

### DESCRIPTION OF EMBODIMENTS

The present invention provides a preparation method for a large crystal region high crystallinity carbonaceous fiber, in the preparation method, a two-dimensional graphene oxide sheet is compounded with a one-dimensional linear polymer, with an help of a unique two-dimensional topological geometry of large-size graphene oxide, the one-dimensional linear polymer uses the large-size graphene oxide as a geometric template, and through a "structural template effect", the polymer directional assembly crystallization is achieved to obtain composite raw fiber with high crystallinity; and then through a "graphitization-inducing effect" of graphene during a heat treatment process, a highly oriented two-dimensional graphene-like layer can be formed by polymer precursors, thereby solving a problem of mismatch between one-dimensional and two-dimensional topological geometric dimensions, which is conducive to forming large-size graphite crystals, at the same time, a stacking mode of graphene sheets is adjusted to increase a proportion of AB ordered stacking, and thus, a graphene fiber with high graphite crystallinity is obtained. Finally, a graphene material with high crystallinity is obtained, an orientation degree of the graphite crystals is greater than 80%, a density is greater than or equal to 1.8g/cm³, a lateral size (La) of each graphene crystal ranges from 60 nm to 200 nm, a longitudinal size (Lc) of the graphite crystals ranges from 10nm to 30 nm, an internal graphite crystal stacking mode is mainly the AB ordered stacking, and a proportion of the AB ordered stacking is not less than 50% of the overall graphite crystal region inside the fiber.

### Example 1:

In the Example, one-dimensional linear polymer polyacrylonitrile (the residual carbon rate is 30% and the aromaticity index is 0.8) is used to prepare a carbon fiber, and effects of parameters of a two-dimensional flake crystal seed used for induction (see Table 1) on its performance are studied, details are as follows:
(1) Dispersing the polyacrylonitrile evenly in a pure DMF solution, and adding graphene oxide, to form a spinning solution, a solid content of the system is 5%.
(2) Extruding a liquid crystal composite spinning solution into a coagulation bath of pure ethyl acetate, and carrying out a wet liquid crystal spinning process to obtain a composite raw fiber with high crystallinity. An appropriate drafting force of 5N is maintained during the spinning process.
(3) Placing the raw fiber in a tube furnace, heating to 2000 °C for heat treatment for 3 hours, and a pneumatic pressure is 10MPa.

**Table 1**

| sample number | graphene oxide (A) | | polymer (B) | | mass ratio (A/B) | carbon content ratio (A/B) |
|---|---|---|---|---|---|---|
| | size | carbon oxygen ratio | residual carbon rate | aromaticity index | | |
| 1 | / | / | 40% | 0.8 | 0 | 0 |
| 2 | 45±20 | 1 | 40% | 0.8 | 30% | 0.76 |
| 3 | 45±20 | 0.5 | 40% | 0.8 | 30% | 0.71 |
| 4 | 45±20 | 1 | 10% | 0.3 | 30% | 0.56 |
| 5 | 45±20 | 1 | 40% | 0.8 | 5% | 0.12 |
| 6 | 1±10 | 1 | 40% | 0.8 | 30% | 0.76 |
| 7 | 80±20 | 2.5 | 40% | 0.8 | 30% | 0.76 |
| 8 | 150±20 | 2.5 | 40% | 0.8 | 30% | 0.76 |

The crystallinity of the composite raw fiber, the graphitization degree of the graphene fiber, the size of the graphite crystal, and the AB ordered stacking degree in the graphite crystal region are obtained by a wide angle X-ray diffraction testing, see Table 2, and an interlayer spacing of the graphite crystal region is below 0.35 nm.

Mechanical strength of the product is tested by a Keysight T150U instrument, electrical conductivity is tested through a fiber four-wire method, to obtain the electrical conductivity of the product graphene fiber; and the thermal conductivity of the product graphene fiber is obtained by a thermal conductivity test T-type method, results are shown in Table 2.

**Table 2**

| sample number | The crystallinity of the composite raw fiber (%) | The graphitization degree of the graphene fiber (%) | The size of graphite crystal region of graphene fiber (nm) | The AB ordered stacking degree in the graphite crystal region (%) | A tensile strength of the graphene fiber (GPa) | The electrical conductivity of the graphene fiber (S/m) | The thermal conductivity of the graphene fiber (W/mK) |
|---|---|---|---|---|---|---|---|
| 1 | 25% | 30% | 5 | 0% | 0.47 | 0.5*10⁵ | 50 |
| 2 | 90% | 90 | 200 | 50% | 2.4 | 3*10⁵ | 440 |
| 3 | 45% | 51 | 42 | 11% | 0.7 | 1.2*10⁵ | 87 |
| 4 | 80% | 35% | 15 | 0% | 0.4 | 0.3*10⁵ | 35 |
| 5 | 49% | 53 | 45 | 13% | 0.73 | 1.3*10⁵ | 89 |
| 6 | 32% | 36 | 20 | 3% | 0.6 | 1*10⁵ | 78 |
| 7 | 100% | 95 | 220 | 60 | 2.5 | 3.2*10⁵ | 850 |
| 8 | 93% | 87% | 180 | 45% | 2 | 2.8*10⁵ | 770 |

By analyzing sample 2 and sample 1 in Example 1, it can be found that the crystallinity of the raw fiber can be greatly improved by adding the two-dimensional graphene oxide seed, and more perfect graphitization degree and size of graphite crystal region can be generated, to obtain the graphene fiber with high crystallinity and high thermal conductivity.

By analyzing sample 2 and sample 3 in Example 1, it can be found that as the carbon oxygen ratio of the two-dimensional graphene oxide gradually increased, the performance of the resulting graphene fiber is improved, which is due to the increase of the carbon content ratio of a graphene oxide/polypropylene composite system, the final residual carbon rate is improved, and the graphitization-inducting effect of the graphene oxide is more obvious, at the same time, the graphene oxide still has liquid crystal properties, and a smooth progress of liquid crystal spinning process can be ensured.

By analyzing sample 2 and sample 4 in Example 1, it can be found that the residual carbon rate and the aromaticity index of polyacrylonitrile are increased, the graphitization effect induced by the two-dimensional topological seed is stronger, and the properties of the resulting graphene fibers are gradually enhanced. If the residual carbon rate of the polymer is too low, an effective intermediate phase solid carbon product cannot be formed when the graphene oxide is induced by the graphitization, and the carbonaceous gaseous small molecules of the final polymer escape, thereby causing porous inside the fiber, and finally the graphene fiber with high crystallinity and high thermal conductivity cannot be obtained.

By analyzing sample 2 and sample 5 in Example 1, it can be found that with the increase of an addition amount of the two-dimensional graphene oxide, the graphitization effect induced by the two-dimensional topological seed is stronger, and properties of the resulting graphene fiber are gradually enhanced. However, when the composite addition amount is too small, the graphene oxide is not easy to form the liquid crystal phase in the polymer solution, the continuous two-dimensional structure cannot be formed in the polymer matrix, thereby resulting in the crystallinity of the raw fiber and the graphitization degree of the graphene fiber cannot be improved, and finally the graphene fiber with high crystallinity and high thermal conductivity cannot be obtained.

By analyzing sample 2, sample 6, sample 7 and sample 8 in Example 1, it can be found that as the size of two-dimensional graphene oxide increased from small to large, the graphitization-inducing effect of the two-dimensional graphene seed gradually increased. When the sheet diameter is too small, the advantages of the graphene as the two-dimensional topological geometric plane structure cannot be fully utilized; however, when the size of the graphene oxide exceeds 150 µm, since wrinkle structures are easy to be produced by a large-size single-layer graphene oxide sheet during the spinning process, which is not conducive to inducing a formation of perfect graphite crystals after the heat treatment, thereby leading to a decrease in the crystallinity of the raw fiber and the graphitization degree of the graphene to a certain extent, and reducing the final mechanical properties and thermal conductivity of the graphene fiber.

### Example 2:

In the Example, different one-dimensional linear polymers (with different residual carbon rates and aromaticity indexes) are used to prepare carbon fibers, see Table 3, details are as follows:
(1) Dispersing the one-dimensional linear polymer evenly in a pure DMSO solution, and adding graphene oxide, to form a spinning solution, the solid content of the system is 10%. The size of the graphene oxide is 45±20 micrometers, the carbon oxygen ratio is 2.5; the ratio of the carbon content of the two-dimensional flake seed to the carbon content of the polymer is controlled at 0.76±0.02; and the solid content of a mixed solution is 5 mg/g.
(2) Extruding a liquid crystal composite spinning solution into a coagulation bath of pure ethyl acetate, and carrying out the wet liquid crystal spinning process to obtain a composite raw fiber with high crystallinity.
(3) Placing the raw fiber in a tube furnace, then heating to 2000 °C for heat treatment, and a pneumatic pressure is 5MPa.

**Table 3**

| sample number | polymer | residual carbon rate | aromaticity index | heat treatment temperature (°C) | time (h) |
|---|---|---|---|---|---|
| 1 | polyimide | 80% | 2.1 | 2000 | 0.5 |
| 2 | Lignin | 55% | 1.2 | 3000 | 0.5 |
| 3 | asphalt | 70% | 1.7 | 2400 | 1.5 |
| 4 | phenolic resin | 60% | 1.4 | 2500 | 3 |

The crystallinity of the composite raw fiber, the graphitization degree of the graphene fiber, the size of the graphite crystal, and the AB ordered stacking degree in the graphite crystal region are obtained by the wide angle X-ray diffraction testing, see Table 4, and the interlayer spacing of the graphite crystal region is below 0.35 nm.

Mechanical strength of the product is tested by the Keysight T150U instrument, the electrical conductivity is tested through the fiber four-wire method, to obtain the electrical conductivity of the product graphene fiber; and the thermal conductivity of the product graphene fiber is obtained by the T-type method, results are shown in Table 4.

**Table 4**

| sample number | The crystallinity of the raw fiber (%) | The graphitization degree of the graphene fiber (%) | The size of graphite crystal region of graphene fiber (nm) | The AB ordered stacking degree in the graphite crystal region (%) | The tensile strength of the graphene fiber (GPa) | The electrical conductivity of the graphene fiber(S/m) | The thermal conductivity of the graphene fiber(W/mK) |
|---|---|---|---|---|---|---|---|
| 1 | 95% | 100% | 230 | 80% | 2.1 | 4.0*10⁵ | 890 |
| 2 | 85% | 88% | 150 | 60% | 1.9 | 3.5*10⁵ | 780 |
| 3 | 90% | 92% | 130 | 75% | 2.0 | 4.3*10⁵ | 70 |
| 4 | 87% | 90% | 180 | 67% | 1.8 | 3.7*10⁵ | 730 |

By analyzing samples in Example 2, it can be found that the graphene oxide can be used as the two-dimensional crystal seed to induce graphitization of polymers with residual carbon rate higher than 50% (polyimide, Lignin, asphalt, phenolic resin), to obtain the graphene fiber with high crystallinity and high thermal conductivity finally.

## Claims

1. A preparation method for a large crystal region high crystallinity carbonaceous fiber, wherein, the preparation method is: adding a two-dimensional flake crystal seed to a solution of a one-dimensional linear polymer, after mixing evenly, carrying out wet spinning; heating a composite raw fiber obtained by spinning to greater than 2000 °C and high temperature treating for 0.5 to 3 hours, to obtain the large crystal region high crystallinity carbonaceous fiber; the two-dimensional flake crystal seed is a graphene oxide sheet, a size is greater than 30 micrometers, and a carbon oxygen ratio is greater than 0.5; one-dimensional linear polymer molecules are carbonizable polymers, a residual carbon rate is greater than 20%, and an aromaticity index is greater than 0.8; a ratio of a carbon content of the two-dimensional flake crystal seed to a carbon content of the one-dimensional linear polymer is greater than 1:8.3; and a solid content of a mixed solution is 3 mg/g to 30 mg/g.

2. The preparation method of claim 1, wherein a polarity parameter of a coagulation bath used in the wet spinning is 0.3 to 0.5, and temperature of the coagulation bath is controlled at 40 to 70 ° C.

3. The preparation method of claim 1, wherein a solvent of the mixed solution is one or more of water, N, N-dimethylformamide (DMF), N, N-dimethylacetamide (DMAC), N-methyl pyrrolidone (NMP), dimethyl sulfoxide (DMSO), ethanol and glycerol, and mixed in any proportion.

4. The preparation method of claim 1, wherein the one-dimensional linear polymer molecules are selected from one or more of polyacrylonitrile (PAN), polyimide (PI), polyacrylamide (PAM), Lignin, asphalt and phenolic resin, and mixed in any proportion.

5. The preparation method of claim 1, wherein a drafting force is maintained during both a process of the wet spinning and a process of the high temperature treating.

6. An application of the large crystal region high crystallinity carbonaceous fiber prepared by the preparation method of claim 1 in graphene materials with high strength, high modulus, high electrical conductivity and high thermal conductivity.
